**Europäisches Patentamt**

**European Patent Office**

**Office européen des brevets**

(19)

(11) Numéro de publication: **0 009 434**
**B1**

(12) **FASCICULE DE BREVET EUROPEEN**

(45) Date de publication du fascicule du brevet: **12.05.82**

(51) Int. Cl.³: **F 16 B 7/04 //F16B12/40**

(21) Numéro de dépôt: **79400620.5**

(22) Date de dépôt: **06.09.79**

(54) Dispositif d'assemblage de plusieurs barres tubulaires concourantes.

(30) Priorité: **22.09.78 FR 7827721**

(43) Date de publication de la demande:
**02.04.80 Bulletin 80/7**

(45) Mention de la délivrance du brevet:
**12.05.82 Bulletin 82/19**

(84) Etats contractants désignés:
**AT BE CH DE GB IT NL SE**

(56) Documents cités:
**DE - A - 1 930 039**
**FR - A - 1 218 379**
**FR - A - 2 045 969**
**FR - A - 2 089 676**

(73) Titulaire: **Vandelanoite, Pierre**
**5/6 rue Mercier**
**F-59390 Lys-les-Lannoy (FR)**

(72) Inventeur: **Vandelanoite, Pierre**
**5/6 rue Mercier**
**F-59390 Lys-les-Lannoy (FR)**

(74) Mandataire: **Lemoine, Jean**
**12, boulevard de la Liberté**
**F-59800 Lille (FR)**

Courier Press, Leamington Spa, England.

## Dispositif d'assemblage de plusieurs barres tubulaires concourantes

### Domaine technique

La présente invention concerne un dispositif d'assemblage de plusieurs barres tubulaires concourantes à l'aide d'un noyau central étoilé à pointes qui s'emmanchent dans les extrémités de tubes, chacune des pointes comportant un moyen de serrage par expansion dans lesdits tubes dont les extrémités sont elles-mêmes conformées pour s'adapter l'une à l'autre de manière à recouvrir complétement le noyau central, un accès étant cependant ménagé pour agir sur le moyen de serrage de chaque pointes.

### Problème posé

Il s'agit de pouvoir assembler rapidement des tubes, généralement orthogonaux, avec un moyen simple démontable mais seulement lorsque c'est nécessaire. Il s'agit aussi d'assurer la rigidité de cet assemblage.

### Etat de la technique antérieure et inconvénients

Il existe de nombreux assemblages de ce genre avec des systèmes de serrage à vis où généralement la vis se visse dans le tube et appuie sur une pointe ou branche du noyau central étoilé. Pour éviter tout mouvement intempestif, il faut absolument exercer un serrage énergique qui peut parfois détériorer les filets de la vis et qui n'exclut pas des mouvements dans le plan perpendiculaire à l'axe de la vis. Dès que celle-ci parvient à se déserrer, la rigidité la l'assemblage n'existe plus et cet assemblage risque de se dissocier facilement.

Dans cet esprit, on peut citer le brevet français 1 218 379 (Grajecki) qui concerne un assemblage d'angle de profilés creux. Cet assemblage est réalisé par une ou plusieurs équerres rigides remplissant en partie seulement l'intérieur des profilés à assembler, une autre partie de cet intervalle étant occupé par des clavettes en forme de coin se déplaçant sur dès rampes des équerres, sous l'effet de vis, notamment. Dans ce système, de déplacement des clavettes pour bloquer les tubes a tendance à écarter la jonction des deux tubes suivant leur plan oblique (coupe à l'onglet).

De plus, le serrage d'un emmanchement se fait en accédant par un trou d'un autre tube non concerné, ce qui limite le noeud à trois tubes au maximum, et même à deux généralement; quatre tubes ne peuvent pas être assemblés avec ce système. On peut également préciser que l'accès des vis à l'extérieur n'est pas esthétique pour du mobilier, puisqu'il se fait dans les angles saillants. Aucun rattrapage de jeu dans la direction perpendiculaire au déplacement des clavettes n'est prévu et l'assemblage n'est pas rigide.

Le brevet français 2 045 969 (Maiworm) présente un système d'assemblage du type où de serrage se fait dans une seule direction à l'aide de vis à tête conique ou de vis pointeau.

Les pièces sont nombreuses et compliqueés, donc onéreuses; aucun rattrapage de jeu autour des axes des vis n'est possible et la rigidité de l'ensemble est douteuse. La section des pièces constituant le noyau central étoilé est réduite de moitié, ce qui diminue la résistance mécanique de l'ensemble. De plus, ce système ne permet pas de réaliser l'assemblage de deux tubes ayant une coupe à 45° (à l'onglet), ce qui est indispensable dans le mobilier, principalement pour l'esthétique, et il faut au moins deux tubes qui viennent buter suivant des sections droites sur un autre élément tubulaire à section carrée qui doit comporter des bouchons si on veut sauvegarder l'esthétique. Cet élément l'étant ouvert, a une résistance faible.

Pour enfiler des branches tubulaires perpendiculairement aux autres, on prévoit une vis d'assemblage dont la poussée ne se fait que dans un seul sens, ce qui provoque une déformation du profilé dans l'angle de celui-ci. Pour réaliser une table basse avec ce dispositif, par exemple, on devra prévoir un bouchon sur le dessus, ce qui n'est pas esthétique.

Comme dans les dispositifs ci-dessus mentionnés, le serrage prévu dans le DE—A 1,930,039 (Schürmann) ne se fait pas dans les angles mais sur les faces, et une oscillation de l'ensemble reste possible. Bien que des pièces s'appliquent suivant des surfaces, le contact est linéaire pour d'autres pièces qui s'écartent sur un côté en fléchissant autour d'un axe. Dans ce système, les pièces sont compliquées et difficiles à obtenir, donc onéreuses et le serrage n'est pas contrôlé; en effet, le déplacement dans un sens d'une pièce implique un autre déplacement latéral directement proportionnel suivant une fonction fixe déterminée par l'inclinaison des dents et des rampes des branches; le serrage ne peut donc pas être réparti suivant les besoins adaptés dans deux directions perpendiculaires.

En fonction des tolérances de dimensions, on a un emmancement qui peut être bloqué autour d'un axe de rotation mais pas autour de l'autre.

Enfin, le brevet français 2 089 676 (Offenbroich) présente un système non démontable, où le serrage n'est pas expansible: il s'agit d'un emboitement à force sur cones qui ne peut pas être retiré.

L'invention est destinée à remédier à tous ces inconvénients.

### Exposé de l'invention

Le dispositif de l'invention est caractérisé principalement par le fait que le moyen de serrage par expansion se compose de deux pièces dont l'une fait partie intégrante du noyau central, susceptibles d'être écartées l'une de l'autre par un moyen de serrage à vis, les deux pièces comportant chacune deux portées obliques latérales coopérant avec des portées correspondantes de l'intérieur des tubes, les deux pièces comportant en outre, du côté de l'extrémité des pointes, des rampes correspondantes qui tendent à écarter lesdites pièces l'une de l'autre si on tend à déplacer longitudinalement la pièce mobile au cours d'un début de démanchement.

Plus précisément, pour des tubes à section carrée orthogonaux, l'assemblage est caractérisé par un noyau à pointes ou branches orthogonales à section générale carrée, dont chaque arête comporte un renflement avec un angle extérieur biseauté à 45° correspondant à un biseau approprié à l'intérieur du tube, chaque pointe comportant une plaquette flottante dont la distance du corps du noyau central peut se régler avec une vis perçant la plaquette et accessible par l'extérieur, vis qui coopère avec un écrou prisonnier de ladite plaquette, et dont l'extrémité tournée vers le bout de la pointe comporte une rampe coopérant avec une rampe correspondante de la pointe, les deux rampes étant inclinées vers l'intérieur de la pointe ou branche.

Suivant un mode préféré de réalisation, l'accès à la vis de la plaquette se fait par un trou percé dans le tube. De préférence, les plaquettes se trouvent du côté des angles rentrant des pointes ou branches des noyaux.

## Solution au problème et avantages

L'application des efforts de serrage sur quatre rangs inclinés à 45° dans quatre directions différentes immobilise chacun des tubes dans toutes les directions possibles. De plus, l'existence de plaquettes flottantes avec une rampe réalisant l'écartement de la plaquette, c'est-à-dire le serrage de l'emmanchement quand on tend à démancher un tube, empêche les démanchements accidentels.

## Brève description des figures

L'invention sera mieux comprise à l'aide de la description suivante qui en donne un exemple non limitatif de réalisation pratique et qui est illustré par les dessins joints dans lesquels:

la figure 1 est une vue en perspective éclatée d'un assemblage de quatre tubes orthogonaux à l'aide du dispositif de l'invention;

la figure 2 est une vue en coupe droite d'une pointe ou branche avec le tube emmanché;

la figure 3 est une vue schématique montrant la direction des efforts exercés par une plaquette;

la figure 4 est une vue en élévation d'une pointe ou branche avec la plaquette;

la figure 5 est une vue schématique de la réaction des efforts de la plaquette à un démanchement.

## Description d'un mode de réalisation

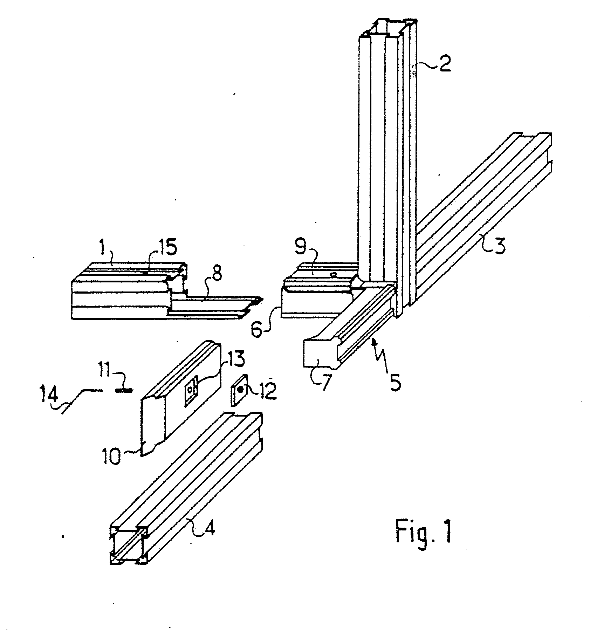

Le dispositif de l'invention, représenté à la figure 1, sert à assembler quatre tube carrés 1, 2, 3, 4 concourantes à l'aide d'un noyau central étoilé à pointes ou branches 5. Pour la commodité du dessin, on a représenté les tubes 1 et 4 déboîtés des deux pointes ou branches 6 et 7. Les tubes 2 et 3 sont emmanchés dans des branches similaires qui sont évidemment invisibles. Les tubes 1 et 2 comportent des grugeages, tels que 8 de manière qu'ils s'adaptent correctement l'un à l'autre en recouvrant complètement le noyau 5 pour que celui-ci soit invisible. Chacune res pointes ou branches 6 ou 7 comporte un moyen de serrage par expansion composé d'une plaquette 9, 10 flottante qui peut s'écarter du reste du noyau central à l'aide d'une vis 11 qui coopère avec un écrou 12 encastré dans un logement correspondant 13 creusé dans la plaquette 9, 10. La vis 11 est une vis sans tête à six pans creux manoeuvrable par une clé 14 grâce à des trous tels que 15, relativement discrets, percés dans les tubes 1 à 4.

Une particularité essentielle de l'invention réside dans le fait que les arêtes des pointes ou branches 6, 7 comportent des renflements 16, 17, 18, 19 avec un angle extérieur tel que 20 biseauté à 45°. En outre, les angles intérieurs des tubes 1, 2, 3, 4 sont biseautés à 45° de la même façon.

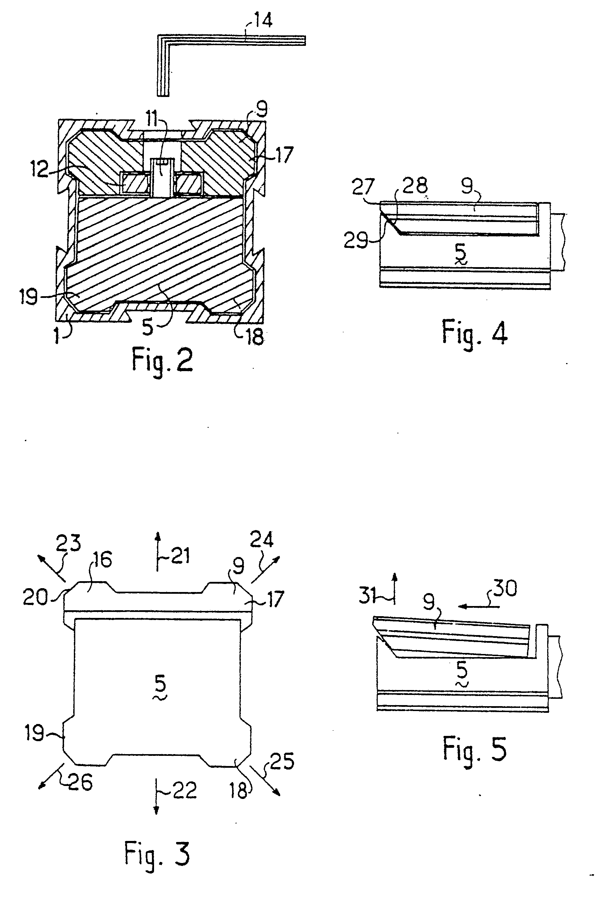

L'action sur la vis 11 a pour effet d'écarter la plaquette 9 de la branche (figure 3) suivant les flèches 21, 22. Il en résulte des pressions dans les angles du tube 1 qui, à cause des angles extérieurs biseautés 20, sont dirigés suivant les flèches 23, 24, 25, 26. Ces quatre directions d'effort immobilisent complètement le tube 1 par rapport à la branche 5.

Une autre particularité de la plaquette flottante 9 est de posséder l'extrémité 27 tournée vers le bout libre de la pointe 5 avec une rampe 28 qui coopère avec une rampe correspondante 29 de la pointe de la branche 5 (figure 4). Les deux rampes 28 et 29 sont inclinées, comme indiquées aux figures 4 et 5, vers l'intérieur de la pointe ou branche 5. Le rôle des rampes 28 et 29 va maintenant être expliqué et illustré par la figure 5.

Si la vis 11 correspondante se desserre légèrement et que le tube 1 coiffant la branche 5 tend à s'extraire suivant la flèche 30 (figure 5), le jeu des rampes 28 et 29 tend à relever l'extrémité de la plaquette 9 suivant la flèche 31 ce qui produit un serrage et une expansion de la plaquette 9 contre les parois intérieures de tube 1, empêchant celui-ci de se démancher.

## Revendications

1. Dispositif d'assemblage démontable de plusieurs barres tubulaires (1, 2, 3, 4) concourantes à l'aide d'un noyau central (5) étoilé à pointes (6, 7) qui s'emmanchent dans les extrémités de tubes, chacune des pointes (6, 7) comportant un moyen de serrage par expansion dans lesdits tubes dont les extrémités sont ellesmêmes conformées pour s'adapter l'une à l'autre de manière à recouvrir complètement le noyau central (5), un accès étant cependant ménagé pour agir sur le moyen de serrage de chaque pointe, caractérisé par la combinaison de deux moyens assurant l'immobilisation de l'assemblage autour de tous les axes d'oscillation possibles quelle que soit l'intensité du serrage, à savoir:

— un moyen de serrage par expansion se composant de deux pièces, dont l'une fait partie intégrante du noyau central (5) et l'autre (9, 10) est mobile ou flottante, simplement adjointe à la première, susceptibles d'être écartées l'une de l'autre par un moyen de serrage à vis (11, 12), les deux pièces comportant chacune deux portées obliques latérales coopérant avec des portées correspondantes de l'intérieur des tubes, en poussant latéralement dans quatre directions différentes sensiblement perpendiculaires aux portées obliques,

— et des rampes correspondantes (28, 29) qui tendent à écarter lesdites pièces l'une de l'autre si on tend à déplacer longitudinalement la pièce mobile au cours d'un début de démanchement, lesdites rampes étant situées du côté des pointes du noyau.

2. Dispositif d'assemblage, tel que défini dans la revendication 1, pour tubes à section carrée orthogonaux, caractérisé par un noyau (5) à pointes (6, 7) orthogonales à sections générales carrées, dont chaque arête comporte un renflement avec un angle extérieur biseauté à 45° correspondant à un biseau approprié à l'intérieur du tube dans chaque angle de celui-ci, chaque pointe (6, 7) comportant une plaquette flottante (9, 10) dont l'écartement par rapport au corps de chaque pointe (6, 7) du noyau central peut se régler avec une vis (11) perçant la plaquette (9, 10) et accessible par l'extérieur, vis (11) qui coopère avec un écrou prisonnier (12) de ladite plaquette et qui est accessible pour être actionnée de l'extérieur d'un côté le moins exposé et le moins visible de l'assemblage, c'est-à-dire en général dans un angle rentrant, l'extrémité (27) de plaquette flottante (9, 10) tournée vers le bout de la pointe (6, 7) du noyau (5) comportant une rampe (28) coopérant avec une rampe (29) correspondante de ladite pointe (6, 7) du noyau (5), les deux rampes (28, 29) étant inclinées vers la partie centrale du noyau (5).

3. Dispositif d'assemblage, tel que défini dans la revendication 2, caractérisé par le fait que l'accès à la vis (11) de la plaquette (9, 10) se fait par un trou percé dans le tube.

4. Dispositif d'assemblage, tel que défini dans l'une ou l'autre des revendications 2 ou 3, prise isolément, caractérisé par le fait que les plaquettes (9, 10) se trouvent du côté des angles rentrants des pointes (6, 7) du noyau (5).

**Patentansprüche:**

1. Vorrichtung zur lösbaren Verbindung einer Mehrzahl von zusammenlaufenden rohrförmigen Stangen (1, 2, 3, 4) mittels eines sternförmig verlaufende Ansatzstücke (6, 7) aufweisenden Zentralkerns (5), welche Ansatzstücke in die Rohrenden einsteckbar sind, wobei jedes Ansatzstück (6, 7) ein Mittel zum Spannen durch Ausdehnung in diesen Rohren, deren Enden so gestaltet sind, daß sie sich zwecks vollkommener Überdeckung des Zentralkerns (5) unter Beibehaltung der Zugänglichkeit zwecks Betätigung des Spannmittels jedes Ansatzstückes aneinanderfügen, aufweist, gekennzeichnet durch die Kombination zweier Mittel, welche die Stabilität der Verbindung um alle möglichen Oszillationsachsen unabhängig von der Intensität des Anspannens gewährleisten, und zwar:

— eines Mittels zum Spannen durch Ausdehnung, bestehend aus zwei Stücken, von denen eines ein integraler Bestandteil des Zentralkerns (5) und das andere (9, 10) beweglich oder schwimmend ausgebildet und dem ersten auf einfache Weise beigeordnet ist und welche durch eine Schraubspanneinrichtung (11, 12) voneinander abhebbar sind, wobei die beiden Stücke jeweils zwei seitliche Schrägflächen aufweisen, die mit entsprechenden Schrägflächen im Rohrinneren durch seitliches Drücken auf die Schrägflächen in vier verschiedene, im wesentlichen senkrecht zueinander stehende Richtungen zusammenwirken,

— und zueinander korrespondierender Rampen (28, 29), die zu Beginn des Lösens bei einer Verschiebung des beweglichen Stückes in Längsrichtung ein Abheben des einen Stücks vom anderen bewirken, wobei die Rampen bei den Ansatzstücken des Kerns angeordnet sind.

2. Vorrichtung nach Anspruch 1 zur Verbindung von orthogonalen Rohren mit viereckigem Querschnitt, gekennzeichnet durch einen Kern (5) mit orthogonalen Ansatzstücken von im allgemeinen viereckigem Querschnitt, deren Ecken jeweils eine Verdickung mit einem abgeschrägten Außenwinkel von 45° entsprechend einer passenden Schrägfläche im Rohrinneren in jeder Ecke desselben aufweisen, wobei jedes Ansatzstück (6, 7) eine schwimmende Platte (9, 10) aufweist, deren Abhebung vom Körper eines jeden Ansatzstücks (6, 7) des Zentralkerns mit einer die Platte (9, 10) gehenden und von außen zugänglichen Schraube (11) regulierbar ist, welche Schraube (11) mit einer in der Platte eingebetteten Mutter (12) zusammenwirkt und an einer weniger ausgesetzten bzw. weniger sichtbaren Stelle der Verbindung, d.h. im allgemeinen in einem einspringenden Winkel, von außen zugänglich bzw. betätigbar ist, wobei das zum Ende des Ansatzstücks (6, 7) des Kerns (5) gerichtete Ende (27) der schwimmenden Platte (9, 10) eine Rampe (28) aufweist, die mit einer entsprechenden Rampe (29) des Ansatzstücks (6, 7) des Kerns (5) zusammenwirkt, wobei die beiden Rampen (28, 29) zum Mittelteil des Kerns (5) geneigt sind.

3. Vorrichtung nach Anspruch 2, dadurch gekennzeichnet, daß die Schraube (11) der Platte (9, 10) über ein im Rohr vorgesehenes Loch zugänglich ist.

4. Vorrichtung nach einem der Ansprüche 2 oder 3, dadurch gekennzeichnet, daß sich die Platten (9, 10) an der Seite der einspringenden Winkel der Ansatzstücke (6, 7) des Kerns (5) befinden.

## Claims

1. Device for the unloosenable assembling of a plurality of convergent tubular bars (1, 2, 3, 4) by means of a star-shaped central bore (5) with points (6, 7) which fit into the tube ends, each of the points (6, 7) having a means for clamping by expansion in said tubes, the ends of which are themselves shaped to fit each other in such manner as to completely cover the central core (5), access being however provided to act on the clamping means of each point, characterized by the combination of two means assuring the locking of the assembly around all possible axes of oscillation, whatever the intensity of the clamping, namely:
— a means for clamping by expansion, composed of two parts, one of which is an integral part of the central core (5) and the other (9, 10) is movable or floating and simply juxtaposed with the first, they being capable of being moved apart from each other by a screw clamping means (11, 12), each of the two parts having two lateral oblique bearing surfaces cooperating with the corresponding bearing surfaces of the inside of the tubes, by pushing laterally in four different directions substantially perpendicular to the oblique bearing surface, and
— corresponding inclined planes (28, 29) which tend to move the said parts away from each other if one tries to displace the movable part longitudinally during an incipient uncoupling, the said inclined planes being located on the side towards the points of the core.

2. Assembly device, as defined in claim 1, for orthogonal tubes of square section, characterized by a core (5) with orthogonal points (6, 7) of square general section, each edge of which has an enlargement with an external-corner beveled at 45° corresponding to a suitable bevel within the tube in each corner thereof, each point (6, 7) having a floating plate (9, 10) the distance of which from the body of each point (6, 7) of the central core can be adjusted by a screw (11) which passes through the plate (9, 10) and is accessible from the outside, said screw (11) cooperating with an immovable nut (12) contained in said plate and being accessible in order to be actuated from the outside on the least exposed and least visible side of the assembly, that is to say in general in a reentrant corner, the end (27) of the floating plate (9, 10) which faces the end of the point (6, 7) of the core (5) having an inclined plane (28) which cooperates with a corresponding inclined plane (29) of the said point (6, 7) of the core (5), the two inclined planes (28, 29) being inclined towards the central portion of the core (5).

3. Assembly device as defined in claim 2, characterized by the fact that the access to the screw (11) of the plate (9, 10) is obtained through a hole drilled in the tube.

4. Assembly device as defined in either of claims 2 and 3, taken individually, characterized by the fact that the plates (9, 10) are located on the reentrant-corner side of the points (6, 7) of the core (5).

Fig. 1

Fig. 2

Fig. 4

Fig. 3

Fig. 5